(19) Europäisches Patentamt
European Patent Office
Office européen des brevets

(11) Veröffentlichungsnummer : **0 066 544**
**B1**

(12) # EUROPÄISCHE PATENTSCHRIFT

(45) Veröffentlichungstag der Patentschrift : **09.01.85**

(51) Int. Cl.⁴ : **C 02 F 1/50**, C 02 F 5/14

(21) Anmeldenummer : **82810228.5**

(22) Anmeldetag : **26.05.82**

(54) **Wasseraufbereitung.**

(30) Priorität : **30.05.81 GB 8116589**

(43) Veröffentlichungstag der Anmeldung : **08.12.82 Patentblatt 82/49**

(45) Bekanntmachung des Hinweises auf die Patenterteilung : **09.01.85 Patentblatt 85/02**

(84) Benannte Vertragsstaaten : **BE DE FR GB IT NL**

(56) Entgegenhaltungen :
**FR-A- 2 440 402**
**US-A- 3 281 365**
**US-A- 3 531 514**
**US-A- 3 664 807**
**US-A- 4 017 610**
**DATA SHEET "CAR-BAN PQ-612 BIOSTAT" CARLISLE CHEMICALS NOVEMBER 1958**

(73) Patentinhaber : **CIBA-GEIGY AG**
**Postfach**
**CH-4002 Basel (CH)**

(72) Erfinder : **Grade, Reinhardt, Dr.**
**Tulpenweg 11**
**D-6140 Bensheim (DE)**
Erfinder : **Thomas, Brian Martin**
**23 Egerton Road Davenport**
**Stockport Cheshire (GB)**

**EP 0 066 544 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Vorliegende Erfindung betrifft die Aufbereitung von Wasser mit eine mikrobiologische Wirkung aufweisenden Verbindungen.

Verschiedene stickstoffhaltige Verbindungen, insbesondere quartäre Ammoniumverbindungen, Amine und Diamine sind als biologische Wirkstoffe wohlbekannt und werden wegen ihres breiten Wirkungsspektrums gegen Bakterien, Pilze und insbesondere Algen in technischen Kühlwassersystemen und wasserverbrauchenden Verfahren zur Bekämpfung mikrobiologischen Wachstums verwendet.

Die dabei verwendeten Typen von stickstoffhaltigen Verbindungen umfassen :

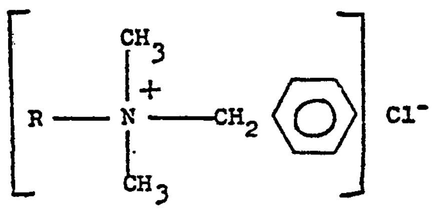

(Alkyldimethylbenzylammoniumchlorid), welches schon als technisches Kühlwasserbiozid, als Algizid für Schwimmbassins oder als Desinfektionsmittel in Gewerbe und Haushalt verwendet wurde, und

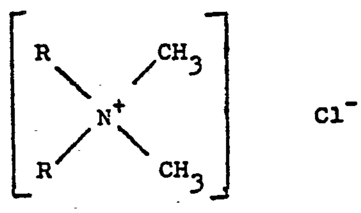

(Dialkyldimethylammoniumchlorid), das als technisches Kühlwasserbiozid oder bei der Petroleumgewinnung als Biozid Anwendung gefunden hat, sowie alkylierte Diamine, die als Biozide bei der Petroleumgewinnung eingesetzt und auch zur Erhöhung der bakteriziden Aktivität anderer Biozide in technischen Kühlwässern verwendet worden sind.

Ein Nachteil der zur Zeit verwendeten Verbindungen auf Stickstoffgrundlage ist, dass sie oberflächenaktive Eigenschaften besitzen und im Gebrauch Schaumbildung verursachen können, insbesondere in Bereichen intensiver Bewegung, wie in Kühltürmen, so dass deren Einsatzmenge sorgfältig reguliert werden muss.

Ferner werden stickstoffhaltige Biozide leicht aus dem Wasser auf Oberflächen adsorbiert, so dass sich eine Konzentrationserniedrigung in der wässrigen Phase ergibt. Eine solche Adsorption kann eintreten, wenn man diese Biozide in Wässern verwendet, die grosse Mengen biologisches Material in Form von suspendierten Zellen oder Schleimmassen enthalten. Der so entstandene Verlust an Produkt aus der Lösung bedeutet, dass ungenügend Biozid zur Verfügung stehen wird, um mit der grossen Zahl der vorhandenen aktiven Organismen fertig zu werden, und die Empfindlichkeit der bioziden Wirkung dieses Chemikalientyps gegen das Vorliegen grosser Mengen von Organismen ist wohlbekannt.

Ein Ziel der Wasseraufbereitung in technischen Kühlwassersystemen besteht darin, Verschmutzung von Wärmeaustauschflächen zu verhindern, die zu unwirtschaftlichem Betrieb des Systems führen könnte. Diese Verschmutzung kann durch Ablagerung verschiedener Materialien, einschliesslich anorganischen Kesselsteins, Korrosionsbruchstücken und mikrobiologischen Bruchstücken, verursacht werden, und es ist üblich, solche Systeme mit einer Kombination von Chemikalien zu behandeln, um so den Aufbau solcher Ablagerungen zu verhindern bzw. deren Entfernung zu erleichtern. Es ist deshalb allgemein üblich, ein System sowohl mit einem kesselstein- oder korrosionsverhütenden Mittel als auch mit einem Biozid zu behandeln. Die heutzutage verwendeten Kesselstein- oder Korrosionsverhütungsformulierungen enthalten meist eine anionische chemische Verbindung, üblicherweise vom Polyacrylat-, Polymaleinat-, Polyphosphat- oder Phosphonattyp.

Ein wesentlicher Nachteil der oben erwähnten kationischen, stickstoffhaltigen Biozide liegt darin, dass bei ihrer Verwendung zusammen mit anionische Chemikalien enthaltenden, kesselstein- oder Korrosionsverhütenden Mitteln die Möglichkeit einer Reaktion zwischen den beiden entgegengesetzt geladenen Verschmutzungshemmstoffen besteht, was zu einem Wirkungsverlust beider Produkte in ihrer beabsichtigten Funktion führt. Diese Tatsache führte zu Beschränkungen in den Chemikalientypen, die zur Aufbereitung technischer Systeme verwendbar sind.

Phosphoniumverbindungen sind bekannte Chemikalien, die wie ihre Aequivalente auf Stickstoffgrundlage eine biologische Wirksamkeit besitzen. Bisher wurde jedoch hauptsächlich deren Verwendung als antiseptische Tenside beschrieben, wegen ihrer hohen Oblerflächenaktivität zusammen mit ihrer

guten biologischen Wirksamkeit. Sie wurden ferner als Korrosionsschutzmittel in ölverarbeitenden Betrieben eingesetzt. Beispiele solcher Anwendungen sind in den U.S. Patentschriften 3 281 365, 3 531 514, 3 652 677 und 3 664 807 offenbart.

In einem Datenblatt der Firma Carlisle wird vorgeschlagen, ein oberflächenaktives Alkyltriphenylphosphoniumchlorid als Biozid in u. a. industriellen Kühlwasseranlagen zu verwenden.

Es wurde nun eine spezielle Gruppe quartärer Phosphoniumverbindungen gefunden, die biologisch aktiv sind und oberflächenaktive Eigenschaften besitzen, indem sie die Oberflächenspannung des Wassers erniedrigen, aber überraschenderweise zu erheblich weniger Schaumbildung als die gegenwärtig verfügbaren Verbindungen auf Stickstoffgrundlage führen.

Die Phosphoniumverbindungen sind hochwirksam gegen anaerobische Bakterien, insbesondere sulfat-reduzierende Bakterien, die wegen der Bildung von Schwefelwasserstoff schwerwiegende Korrosion verursachen können.

Die hohe Oberflächenaktivität der Phosphoniumverbindungen zusammen mit ihren wenig schäumenden Eigenschaften mach sie zu idealen Produkten für die Reinigung verschmutzter Systeme und für eine Kombination mit anderen Bioziden.

Ein weiterer Vorteil der Verwendung dieser speziellen Gruppe von Phosphoniumverbindungen gegenüber den zur Zeit verfügbaren Verbingungen auf Stickstoffgrundlage liegt darin, dass die biologische Aktivität der Verbindungen gegen Mikroorganismen gegen das Vorliegen grosser Zahlen dieser Organismen nicht so empfindlich ist wie bei ihren stickstoffhaltigen Aequivalenten.

Weiterhin ist die Auswirkung dieser Gruppe von Phosphoniumverbindungen auf die Aktivität anionischer Materialien erheblich geringer, und sie können deshalb zusammen mit modernen Kesselstein- und Korrosionsverhütungsmethoden zur Verhinderung biologischen Wachstums im System eingesetzt werden.

Gegenstand vorliegender Erfindung ist demnach ein Verfahren zur Wasseraufbereitung, welches dadurch gekennzeichnet ist, dass man dem Wasser (a) 1 bis 50 ppm* einer Phosphoniumverbindung der Formel

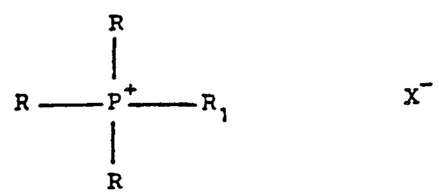

worin R für gegebenenfalls durch eine Cyan-, gegebenenfalls veresterte Hydroxyl- oder eine Arylgruppe substituierte $C_1$-$C_6$-Alkylgruppen, $R_1$ für eine $C_8$-$C_{18}$-Alkylgruppe und X für Chlor oder Brom stehen, sowie gegebenenfalls (b) 0,1 bis 100 ppm eines anionischen Wasseraufbereitungsmittels zusetzt.

Beispiele für dabei verwendbare anionische Wasseraufbereitungsmittel sind unter anderem kesselstein- und korrosionsverhütende Mittel wie Polyacrylate, Polymethacrylate, Polyphosphate, Phosphonate, Aminophosphonate, polymere Carbonsäuren wie das in der britischen Patentschrift Nr. 1 369 429 beschriebene hydrolysierte Polymaleinsäureanhydrid sowie Co- und Terpolymere aus solchen Säuren mit einem oder mehreren weiteren Monomeren, wie in der britischen Patentschrift Nr. 1 414 918 beschrieben, Nitrate, Molybdate, Silicate, Phosphino- und Phosphonocarbonsäuren, Phosphate und substituierte Polyacrylate.

Die Einsatzmenge an kesselstein- oder korrosionsverhütendem Mittel beträgt vorzugsweise 0,5 bis 20 ppm, besonders bevorzugt 0,5 bis 10 ppm.

Die Phosphoniumverbindungen können auch zusammen mit anderen bekannten Wasseraufbereitungsprodukten wie Dispergiermitteln, Bioziden sowie nicht-ionogenen und kationischen Kesselstein- und Korrosionshemmstoffen eingesetzt werden. Beispiele für solche Produkte sind Alkylenoxydkondensationsprodukte, kondensierte Naphthalinsulfonate, sulfonierte Polystyrolpolymere und -copolymere, Amine, quartäre Ammoniumverbindungen, Chlor und chlorabgebende Mittel, Chlorphenole, Sulfone, bromierte Propionamide, Triazine, Methylen-bisthiocyanate und Azole.

Bedeutet der Rest R eine unsubstituierte Alkylgruppe, so handelt es sich um eine geradkettige oder verzweigte Alkylgruppe wie Methyl, Aethyl, n-Propyl, Isopropyl, n-Butyl, sek.-Butyl, n-Amyl und n-Hexyl.

Bei einer substituierten Alkylgruppe R handelt es sich z. B. um Hydroxymethyl, Cyanäthyl, Benzyl oder eine Acyloxyalkylgruppe wie Acetoxyäthyl.

Vorzugsweise ist R eine Alkylgruppe.

Bei dem Rest $R_1$ kann es sich um eine geradkettige oder verzweigte Alkylgruppe handeln, wie n-Octyl, n-Decyl, Dodecyl, Tridecyl, Tetradecyl, Hexadecyl und Octadecyl. Ebenfalls kann ein Gemisch dieser Reste als $R_1$ vorliegen.

Geeignete Phosphoniumverbindungen sind beispielsweise Tri-n-butyl-tetradecyl-phosphoniumchlorid, Tri-n-butyl-tetradecyl-phosphoniumbromid, Tri-n-butyl-dodecyl-phosphoniumchlorid, Triacetoxy-

* Die Abkürzung « ppm » bedeutet « parts per million »

methyl-tetradecylphosphoniumchlorid, Trihydroxymethyl-octadecylphosphoniumchlorid, Tricyanäthylheptyl-phosphoniumbromid und Tribenzyl-tetradecylphosphoniumchlorid.

Die Einsatzmenge an Phosphoniumverbindung beträgt vorzugsweise 10 bis 50 ppm, besonders bevorzugt 10 bis 30 ppm.

Vorliegende Erfindung wird durch die nachfolgenden Beispiele näher erläutert.

## Beispiel 1

Die Auswirkung der Anzahl vorhandener Organismen auf die biologische Aktivität von Tri-n-butyl-tetradecyl-phosphoniumchlorid wird mit derjenigen verschiedener quartärer Ammoniumverbindungen verglichen. Dabei wird der MKC-Wert gemessen, d. h. die Mindestchemikalienkonzentration (in ppm Wirkstoff ausgedrückt), die erforderlich ist, um eine gegebene Anzahl Organismen abzutöten. Bei der Durchführung der Prüfungen wird eine Mischkultur von Bakterien, enthaltend die folgenden schleimbildenden Organismen :

Escherichia coli
Bacillus cereus
Staphylococcus aureus
Pseudomonas aeruginosa
Enterobacter aerogenes
Proteus vulgaris

auf $10^6$/ml (A), $10^5$/ml (B) bzw. $10^4$/ml (C) Bakterien enthaltende Suspensionen verdünnt. Diese Suspensionen werden dann 5 Stunden lang verschiedenen Konzentrationen der Biozide ausgesetzt und der MKC-Wert gemessen. Die Ergebnisse in Tabelle 1 zeigen, dass die hohe Wirksamkeit der Phosphoniumverbindung bei hohem Niveau bakterieller Verunreinigung nicht verringert wird, während dies bei den stickstoffhaltigen Bioziden der Fall ist.

Tabelle 1

| Verbindung | MKC (ppm) A | B | C |
|---|---|---|---|
| Alkyloligoamid (Ferrocid® 591) | 100 | 25 | 12,5 |
| Alkyl-dimethyl-benzylammonium-chlorid (Barquat® MS-100) | 50 | 25 | 12,5 |
| Dimethyl-di-n-decylammonium-chlorid | 25 | 25 | 12,5 |
| Soya-trimethylammoniumchlorid | >100 | >100 | 12,5 |
| Mischalkyl-dimethylammonium-chlorid (Bardac® 20) | 50 | 50 | 12,5 |
| Tri-n-butyl-tetradecylphos-phoniumchlorid | 12,5 | 12,5 | 12,5 |

## Beispiel 2

Die Oberflächenaktivität der folgenden Verbindungen wird durch Bestimmung der Oberflächenspannung verdünnter wässriger Lösungen der Chemikalien gemessen :

(a) Soya-trimethylammoniumchlorid (S)
(b) Dimethyl-di-n-decylammoniumchlorid (22)
(c) Tri-n-butyl-tetradecylphosphoniumchlorid (PC)
(d) Tri-n-butyl-dodecylphosphoniumchlorid (DC).

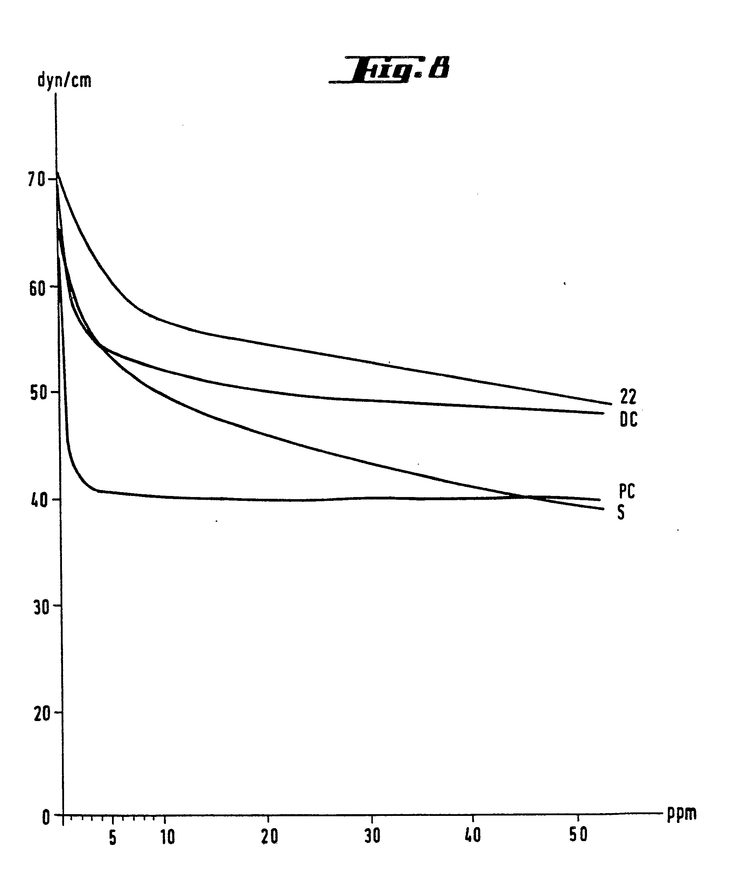

Aus Figur 8 ist die hohe Oberflächenaktivität von PC und DC ersichtlich, insbesondere im Vergleich mit 22.

Ueberraschenderweise führt diese hohe Oberflächenaktivität der Phosphoniumverbindungen jedoch nicht zu einer übermässigen Tendenz zum Schäumen. Tabelle 2 zeigt die Schaumhöhe nach verschiedenen Zeiten, wie in der üblichen Ross-Miles-Schaumprüfung mit denselben vier Chemikalien (a) bis (d) gemessen. Es zeigt sich, dass PC und DC beide erheblich weniger Schaum erzeugen als S oder 22.

Tabelle 2

| Zeit (Minuten) | Schaumhöhe | | | |
|---|---|---|---|---|
| | S (0.05%) | 22 (0.05%) | PC (0.05%) | DC (0.05%) |
| 1 | 63 | 45 | 33 | 18 |
| 30 | 55 | 40 | 19 | 6 |
| 60 | 51 | 38 | 10 | 4 |

Beispiel 3

Einer Lösung von Calciumnitrat in destilliertem Wasser (1,470 g/Liter) setzt man verschiedene Mengen hydrolysiertes Polymaleinsäureanhydrid (PMA als handelsübliches Material « Belgard® EV »), eine zur Kesselsteinverhütung wohlbekannte chemische Verbindung, sowie verschiedene Mengen Tri-n-butyl-tetradecylphosphoniumchlorid (PC) zu.

Eine zur Bestimmung der kesselsteinverhütenden Eigenschaften von Chemikalien routinemässig angewandte Laboratoriumsprüfung ist die sogenannte « Schwellenwertprüfung ». Dabei handelt es sich um die Messung der Fähigkeit des bzw. der untersuchten Chemikalien, die Ausfällung von Calciumcarbonat aus einer mit $Ca^{++}$- und $CO_4^{--}$-Ionen übersättigten Lösung zu unterdrücken.

Die Wirkung von PMA auf die Calciumcarbonatfällung wird dadurch bestimmt (Schwellenwertprüfung), dass man der erhaltenen Lösung dasselbe Volumen Natriumcarbonatlösung (0,646 g/Liter) zusetzt. Das Gemisch wird 24 Stunden bei 25 °C gelagert und das in Lösung bleibende Calcium durch EDTA-Titration bestimmt. Die Ergebnisse werden als prozentuale Hemmung der Calciumcarbonatfällung gegenüber einer Blindprobe ohne Zusatzstoffe ausgedrückt. Die Ergebnisse sind aus Figur 1 ersichtlich.

Die obige Prüfung wird wiederholt, jedoch unter Verwendung der quartären Ammoniumverbindung Dimethyl-benzyl-dodecylamoniumchlorid (QA) und QA Tributylzinnoxid (QT), welches eine typische Biozidformulierung auf quartärer Ammoniumgrundlage darstellt, anstelle von PC. Die Ergebnisse sind in Figuren 2 und 3 dargestellt.

Wie man sieht, ist die Wirkung von PC auf die Wirksamkeit des PMA erheblich geringer als die Wirkung von QA oder QT, und bei einigen PC-Konzentrationen ist die Wirkung von PMA in der Schwellenwertprüfung sogar erhöht.

Beispiel 4

Beispiel 3 wird wiederholt, jedoch unter Verwendung 1,1-Hydroxyäthyliden-diphosphonsäure (HEDP) anstelle von PMA. Als Phosphoniumverbindung wird wiederum PC, jedoch als Vergleichsverbindung handelsübliches $C_{12}H_{25}NH(CH_2)_3NH_2$ (DA) sowie QA und QT eingesetzt.

Die in Figuren 4-7 dargestellten Ergebnisse zeigen, dass die Wirkung von PC auf die Wirksamkeit des HEDP erheblich geringer ist als die der übrigen eingesetzten Verbindungen.

Beispiel 5

Die hohe Aktivität der ausgewählten Phosphoniumverbindungen gegen Algen, wodurch deren Wirksamkeit bei der Bekämpfung der Verschmutzung technischer Kühlwässer erhöht wird, wird durch die folgenden Prüfungen veranschaulicht:

Kulturen der folgenden Algenstämme werden über einen Zeitraum von 14 Tagen in einem Algennährmedium gezüchtet:

a) Oscillatoria geminata
b) Phormidium foveolarum
c) Chlorella vulgaris
d) Scenedesmus spec.

Die Algen werden mit mehr Algenmedium verdünnt, (1 zu 200) und die Phosphoniumverbindungen zu Wirkstoffendkonzentrationen von 1, 2,5, 3,4 und 6,8 ppm zugesetzt. Die Algensuspensionen werden dann

unter Schütteln in einem Wasserbad bei 18 °C mit einem Tageszyklus von 14 Stunden hell und 10 Stunden dunkel inkubiert. Die Suspensionen werden visuell auf Algenwachstum beurteilt und die Mindesthemmkonzentration (MIC) als die niedrigste Konzentration des Produkts aufgezeichnet, bei der jeweils für einen Algenstamm kein Wachstum auftrat. Ferner führt man einen ähnlichen Versuch mit einer Algenmischkultur aus, die neben den Stämmen a bis d noch die folgenden Stämme enthält :

Nostoc spec.
Anacystis nidulans
Chlorella pyrenoidosa
Ulothrix subtilissima
Tribonema aequale.

Bei diesem Versuch liegen die Phosphoniumverbindungen in Konzentrationen von 2, 5, 7,5 bzw. 10 ppm vor.

Als Phosphoniumverbindungen werden untersucht :
Tri-n-butyl-tetradecylphosphoniumchlorid (erfindungsgemäss),
Tri-n-butyl-tetradecylphosphoniumbromid (erfindungsgemäss) und
Tri-phenyl-dodecylphosphoniumchlorid (Vergleichsbeispiel).

Die in Tabelle 3 angeführten Ergebnisse zeigen das hochalgistatische Verhalten der Phosphoniumverbindungen, insbesondere der erfindungsgemässen Tri-n-butylderivate.

Tabelle 3

| Phosphoniumverbindung | MIC (ppm) | | | | |
|---|---|---|---|---|---|
| | Algenstamm | | | | |
| | a | b | c | d | Misch-kultur |
| Tri-n-butyl-tetradecyl-phosphoniumchlorid | 2,5 | 1 | 1 | 1 | 5* |
| Tri-n-butyl-tetradecyl-phosphoniumbromid | 2,5 | 1 | 1 | 1 | 2 |
| Tri-phenyl-dodecyl-phosphoniumchlorid | 2,5 | 1 | 2,5 | 3,4 | 7,5 |

Anmerkung : * Bei 2 ppm wächst nur Stamm (a) ; bei 5 ppm wächst keiner der Stämme.

## Ansprüche

1. Verfahren zur Wasseraufbereitung, dadurch gekennzeichnet, dass man dem Wasser (a) 1 bis 50 ppm (parts per million) einer Phosphoniumverbindung der Formel

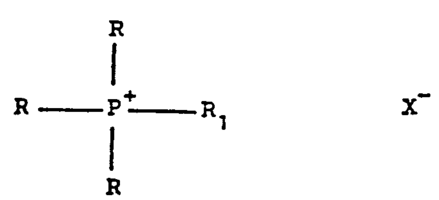

worin R für gegebenenfalls durch eine Cyan-, gegebenenfalls veresterte Hydroxyl- oder eine Arylgruppe substituierte $C_1$-$C_6$-Alkylgruppen, $R_1$ für eine $C_8$-$C_{18}$-Alkylgruppe und X für Chlor oder Brom stehen, sowie gegebenenfalls (b) 0,1 bis 100 ppm (parts per million) eines anionischen Wasseraufbereitungsmittels zusetzt.

2. Verfahren nach Anspruch 1, dadurch gekennzeichnet, dass der Rest R eine $C_1$-$C_6$-Alkylgruppe darstellt.

3. Verfahren nach Anspruch 1 oder 2, dadurch gekennzeichnet, dass der Rest R eine n-Butylgruppe darstellt.

4. Verfahren nach einem der vorhergehenden Ansprüche, dadurch gekennzeichnet, dass der Rest $R_1$ eine Dodecyl- oder Tetradecylgruppe darstellt.

5. Verfahren nach einem der vorhergehenden Ansprüche, dadurch gekennzeichnet, dass die Menge an Phosphoniumverbindung 10 bis 50 ppm beträgt.

6. Verfahren nach Anspruch 5, dadurch gekennzeichnet, dass die Menge an Phosphoniumverbindung 10 bis 30 ppm beträgt.

7. Verfahren nach einem der vorhergehenden Ansprüche, dadurch gekennzeichnet, dass als anionisches Wasseraufbereitungsmittel ein anioniches kesselstein- oder korrosionsverhütendes Mittel vorliegt.

8. Verfahren nach Anspruch 7, dadurch gekennzeichnet, dass als anionisches kesselstein- oder korrosionsverhütendes Mittel ein Polyacrylat, Polymethacrylat, Polyphosphat, Phosphonat, Aminophosphonat, eine polymere Carbonsäure oder ein aus einer Carbonsäure und einem oder mehreren weiteren Monomeren bestehendes Co- oder Terpolymer vorliegt.

9. Verfahren nach einem der vorhergehenden Ansprüche, dadurch gekennzeichnet, dass die Menge an anionischer Verbindung 0,5 bis 20 ppm beträgt.

10. Verfahren nach Anspruch 9, dadurch gekennzeichnet, dass die Menge an anionischer Verbindung 0,5 bis 10 ppm beträgt.

**Claims**

1. A process for treating water which comprises adding to the water (a) from 1 to 50 ppm of a phosphonium compound of the formula

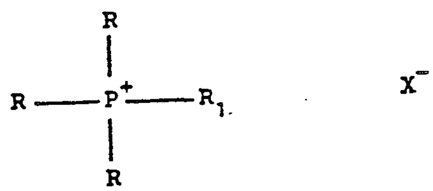

wherein R is $C_1$-$C_6$ alkyl which is unsubstituted or substituted by cyano, free or esterified hydroxy or aryl, $R_1$ is a $C_8$-$C_{18}$ alkyl group and X is chlorine or bromine, and optionally (b) from 0.1 to 100 ppm of an anionic water treatment agent.

2. A process according to claim 1, wherein the radical R is a $C_1$-$C_6$ alkyl group.

3. A process according to either claim 1 or claim 2, wherein the radical R is an n-butyl group.

4. A process according to any one of the preceding claims, wherein the radical $R_1$ is a dodecyl or tetradecyl group.

5. A process according to any one of the preceding claims, wherein the amount of phosphonium compound is from 10 to 50 ppm.

6. A process according to claim 5, wherein the amount of phosphonium compound is from 10 to 30 ppm.

7. A process according to any one of the preceding claims, wherein the anionic water treatment agent is an anionic scale or corrosion inhibitor.

8. A process according to claim 7, wherein the anionic scale or corrosion inhibitor is a polyacrylate, polymethacrylate, polyphosphate, phosphonate, aminophosphonate, polymeric carboxylic acid or a copolymer or terpolymer of a carboxylic acid and one or more additional monomers.

9. A process according to any one of the preceding claims, wherein the amount of anionic compound is from 0.5 to 20 ppm.

10. A process according to claim 9, wherein the amount of anionic compound is from 0.5 to 10 ppm.

**Revendications**

1. Procédé de traitement de l'eau, caractérisé en ce qu'on ajoute à l'eau (a) de 1 à 50 ppm (parties par million) d'un composé phosphonium répondant à la formule

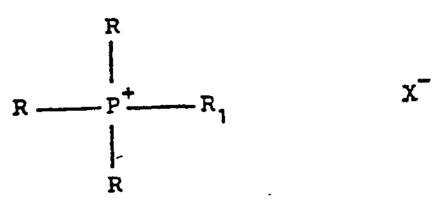

dans laquelle les R désignent des groupes alkyles en $C_1$ à $C_6$ éventuellement porteurs d'un groupe cyano, d'un groupe hydroxy, lequel peut être estérifié, ou d'un groupe aryle, $R_1$ désigne un groupe alkyle en $C_8$ à $C_{18}$ et X le chlore ou le brome, ainsi que le cas échéant (b) de 0,1 à 100 ppm (parties par million) d'un agent de traitement de l'eau anionique.

2. Procédé suivant la revendication 1, caractérisé en ce que le radical R représente un groupe alkyle en $C_1$ à $C_6$.

3. Procédé suivant les revendications 1 ou 2, caractérisé en ce que le radical R représente un groupe n-butyle.

4. Procédé suivant l'une des revendications précédentes, caractérisé en ce que le radical $R_1$ représente un groupe dodécyle ou tétradécyle.

5. Procédé suivant l'une des revendications précédentes, caractérisé en ce que la quantité de composé phosphonium est de 10 à 50 ppm.

6. Procédé suivant la revendication 5, caractérisé en ce que la quantité de composé phosphonium est de 10 à 30 ppm.

7. Procédé suivant l'une des revendications précédentes, caractérisé en ce que comme agent de traitement de l'eau anionique, un agent anionique de protection contre le tartre ou la corrosion est présent.

8. Procédé suivant la revendication 7, caractérisé en ce que comme agent anionique de protection contre le tartre ou la corrosion, un polyacrylate, un polyméthacrylate, un polyphosphate, un aminophosphonate, un acide carboxylique polymère ou un co- ou tert-polymère constitué d'un acide carboxylique et d'un ou plusieurs autres monomères est présent.

9. Procédé suivant l'une des revendications précédentes, caractérisé en ce que la quantité de composé anionique est de 0,5 à 20 ppm.

10. Procédé suivant la revendication 9, caractérisé en ce que la quantité de composé anionique est de 0,5 à 10 ppm.

Fig. 1

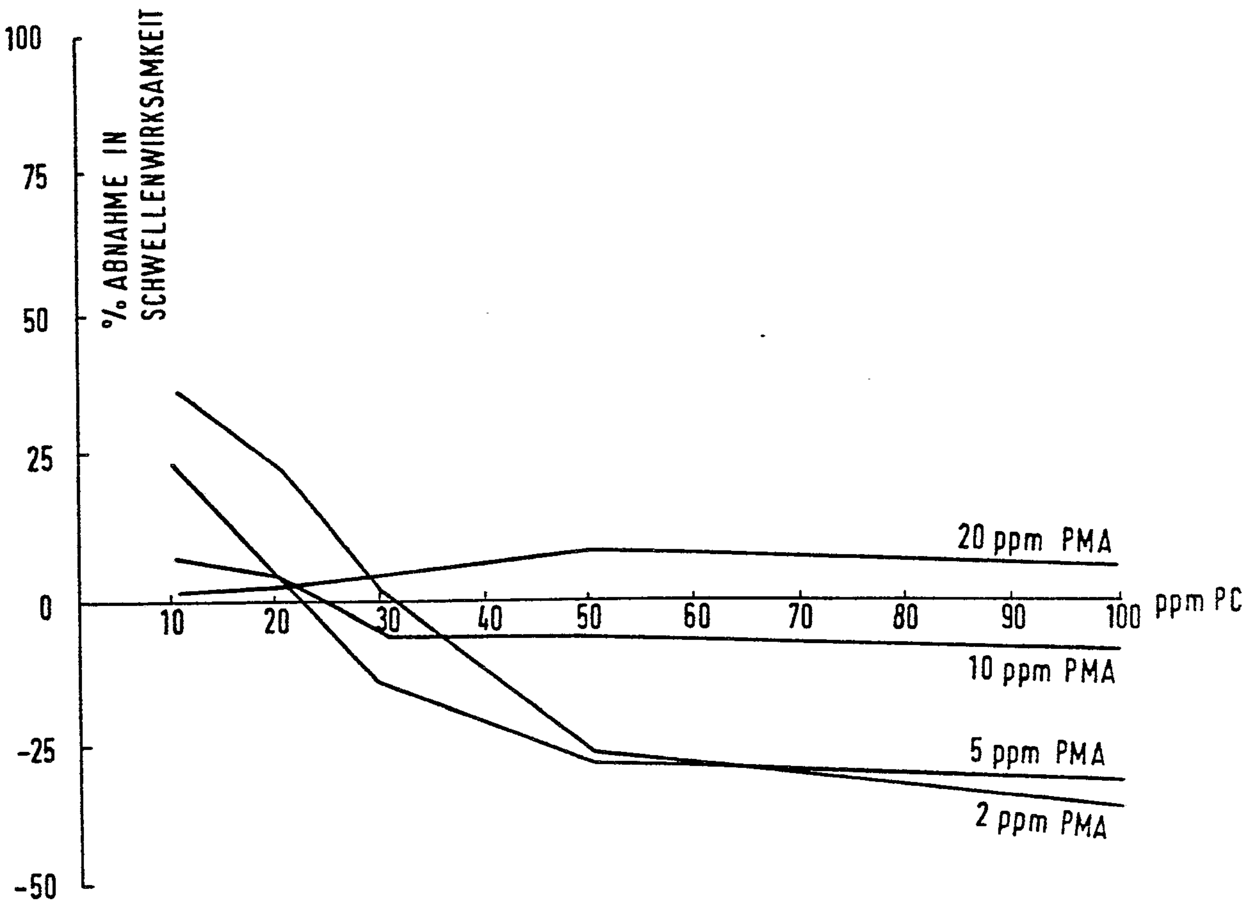

100
75
50
25
0
-25
-50
% ABNAHME IN SCHWELLENWIRKSAMKEIT
10
20
30
40
50
60
70
80
90
100
ppm PC
20 ppm PMA
10 ppm PMA
5 ppm PMA
2 ppm PMA

Fig. 2

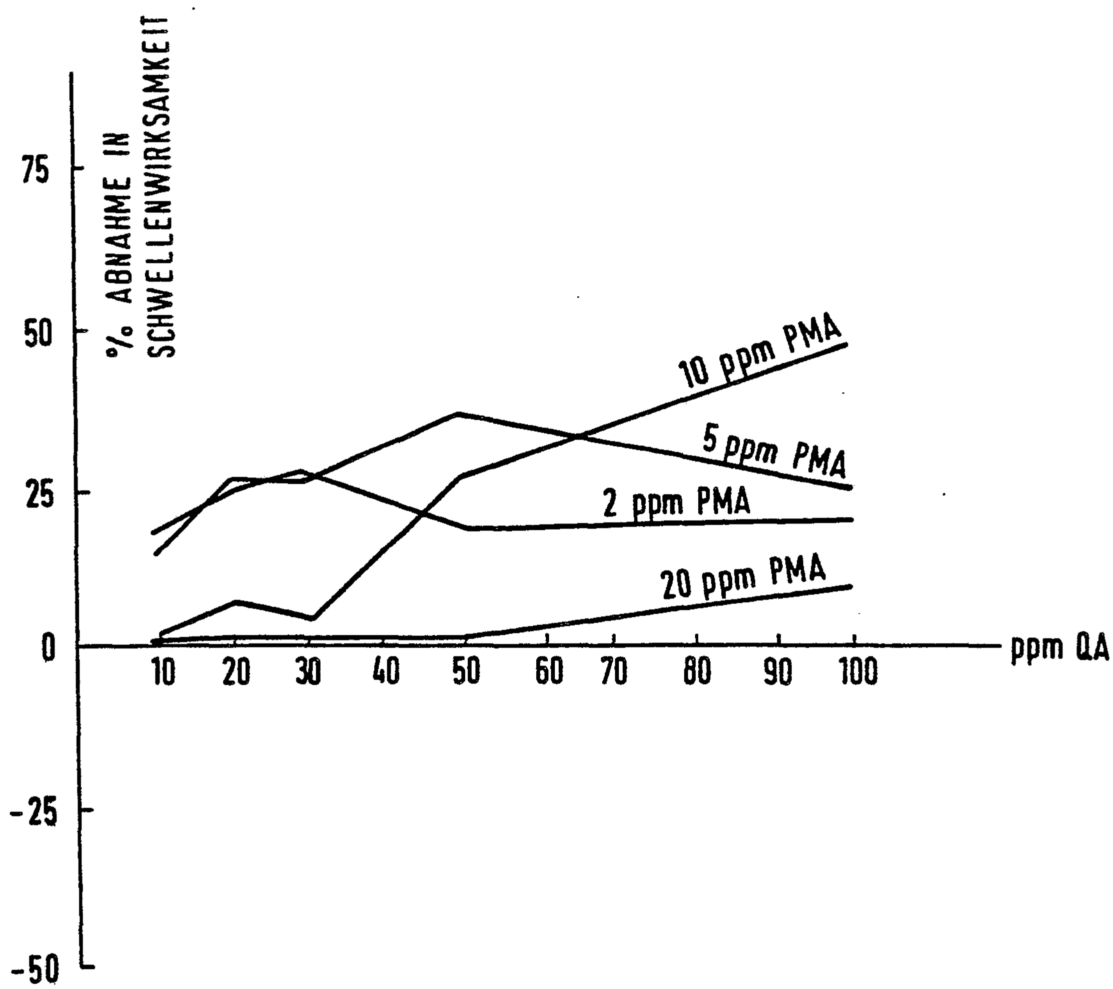
% ABNAHME IN SCHWELLENWIRKSAMKEIT
75
50
25
0
-25
-50
10 ppm PMA
5 ppm PMA
2 ppm PMA
20 ppm PMA
10 20 30 40 50 60 70 80 90 100
ppm QA

Fig. 3

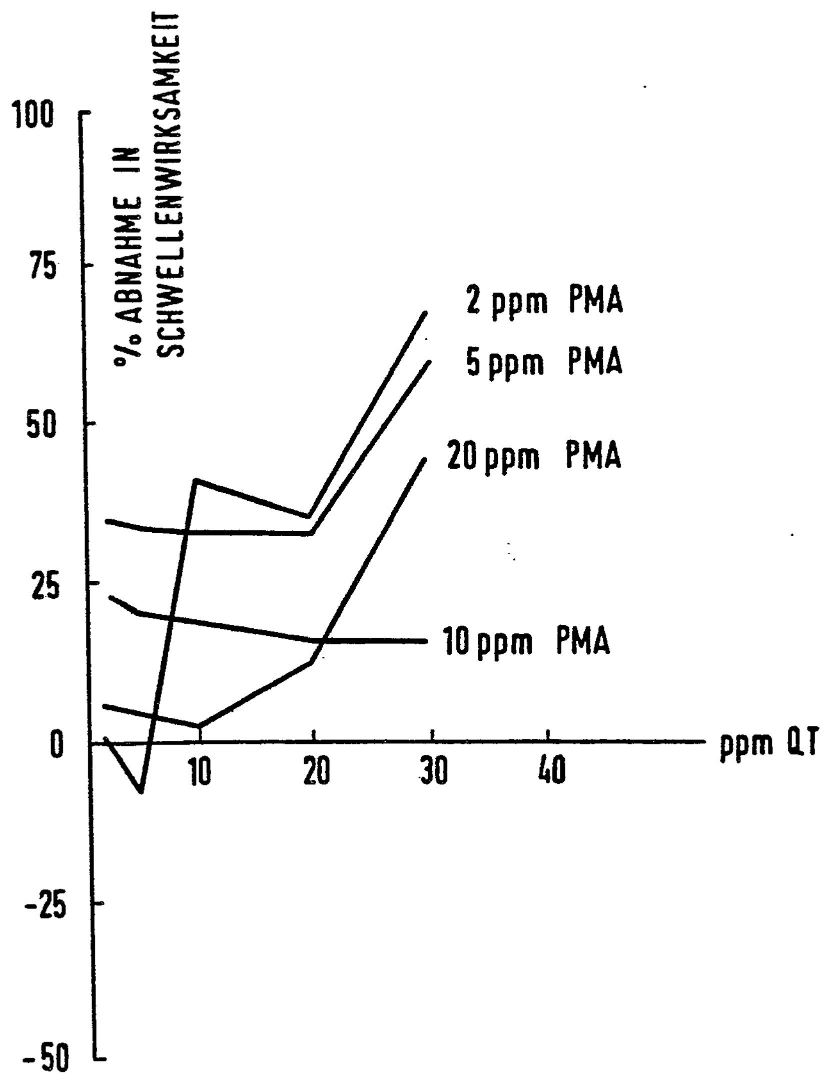
% ABNAHME IN SCHWELLENWIRKSAMKEIT
100
75
50
25
0
-25
-50
10
20
30
40
ppm QT
2 ppm PMA
5 ppm PMA
20 ppm PMA
10 ppm PMA

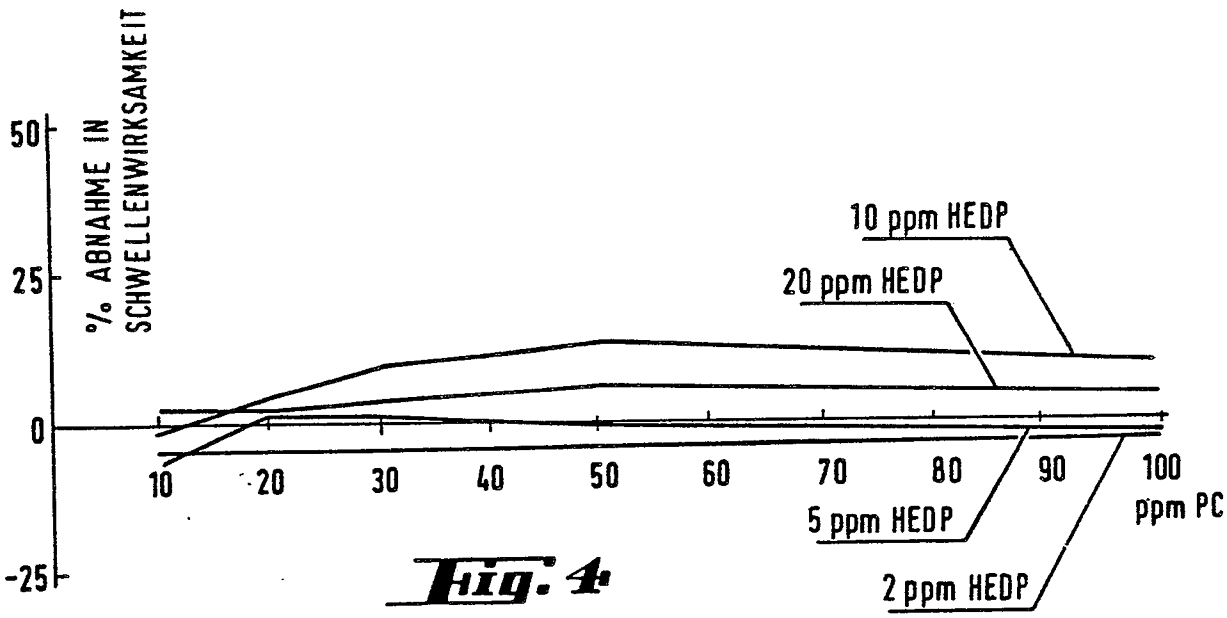
% ABNAHME IN SCHWELLENWIRKSAMKEIT
50
25
0
-25
10 ppm HEDP
20 ppm HEDP
5 ppm HEDP
2 ppm HEDP
10
20
30
40
50
60
70
80
90
100
ppm PC

Fig. 4

Fig. 5

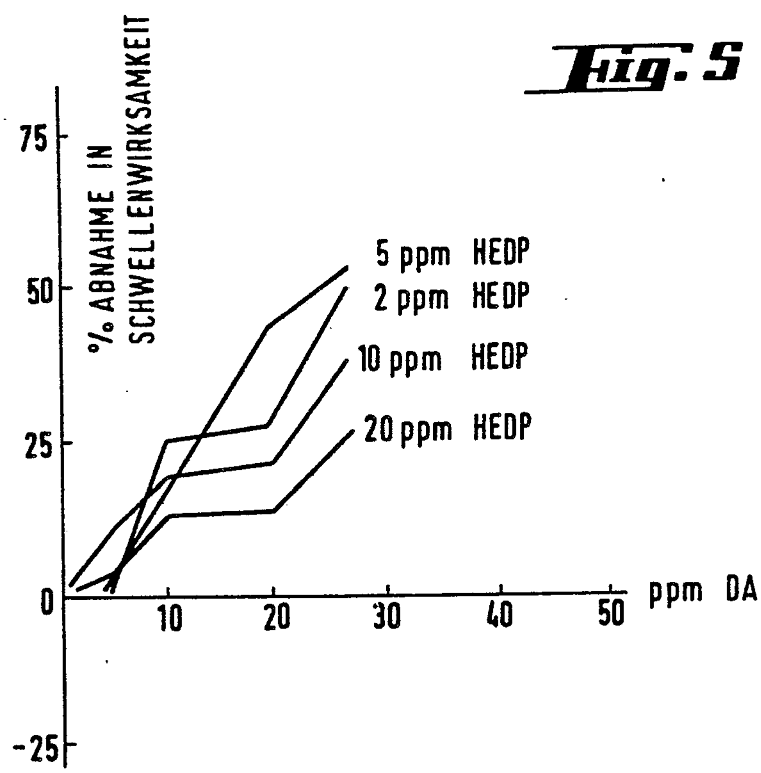
% ABNAHME IN SCHWELLENWIRKSAMKEIT
75
50
25
0
-25
5 ppm HEDP
2 ppm HEDP
10 ppm HEDP
20 ppm HEDP
10
20
30
40
50
ppm DA

Fig. 6

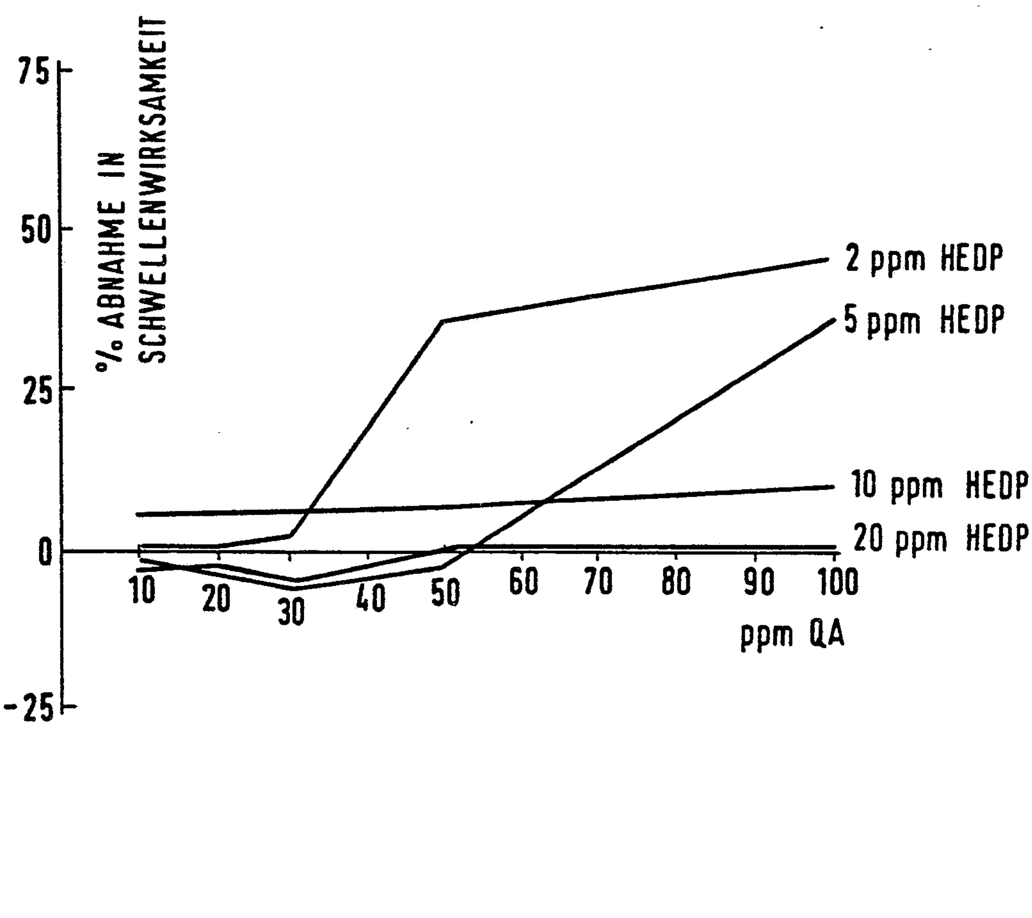
% ABNAHME IN SCHWELLENWIRKSAMKEIT
75
50
25
0
-25
2 ppm HEDP
5 ppm HEDP
10 ppm HEDP
20 ppm HEDP
10
20
30
40
50
60
70
80
90
100
ppm QA

Fig. 7

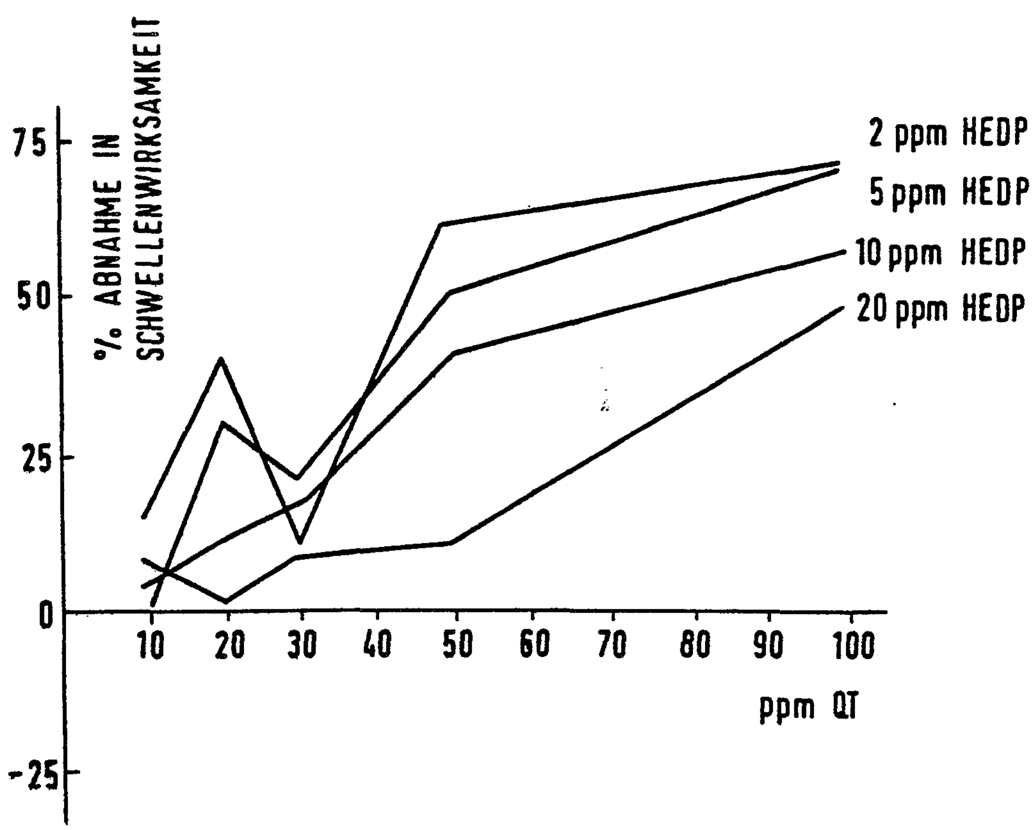
% ABNAHME IN SCHWELLENWIRKSAMKEIT
75
50
25
0
-25
10
20
30
40
50
60
70
80
90
100
ppm QT
2 ppm HEDP
5 ppm HEDP
10 ppm HEDP
20 ppm HEDP

Fig. 8